# NEUE EUROPÄISCHE PATENTSCHRIFT

(11) **EP 0 164 532 B2**
(45) Veröffentlichungstag und Bekanntmachung des Hinweises auf die Entscheidung über den Einspruch: **03.11.1993**
(45) Hinweis auf die Patenterteilung: 23.08.1989
(21) Anmeldenummer: 85104805.8
(22) Anmeldetag: 20.04.1985
(51) Int. Cl.: B60J 7/04

(54) **Sonnendach für Fahrzeuge mit Strahlungsschutzblende**
Sunroof for vehicles with radiation protection screen
Toit pare-soleil pour véhicules ayant un écran de protection contre les rayonnements

(30) Priorität: 15.05.1984 DE 3417983
(43) Veröffentlichungstag der Anmeldung: 18.12.1985
(73) Patentinhaber: Farmont Produktion GmbH & Co. KG, D-40549 Düsseldorf (DE)
(72) Erfinder: Farmont, Rolf, Dr., D-4000 Düsseldorf 30 (DE)
(74) Vertreter: Schumacher, Horst, Dr. Dipl.-Phys.

(56) Entgegenhaltungen:
- DE-A- 2 824 594
- DE-A- 2 943 249
- DE-B- 2 154 400
- DE-C- 3 136 854
- DE-U- 7 129 021
- FR-A- 593 345
- US-A- 2 094 932
- US-A- 4 161 336

## Beschreibung

Die Erfindung betrifft ein Sonnendach für Fahrzeuge gemäß Oberbegriff von Patentanspruch 1. (Ein derartiges Sonnendach ist schon aus der DE-C-3 136 854 bekannt).

Die nach außen klapp- oder schiebbaren Deckel solcher Sonnendächer bestehen aus einem durchsichtigen Material, welches sowohl Licht als auch Wärmestrahlung durchläßt. Zum Schutz vor solcher Strahlung sind deckel- oder rahmenseitig montierte Sonnenschutzblenden vorgeschlagen worden (deutsche Öffenlegungsschriften DE-A-3 000 280 und DE-A-3 242 097) die eine in sich starre Einheit von etwa der Größe der Dachöffnung aufweisen und Schlitze aufweisen können, die mit verstellbaren Schlitzabdeckungen geöffnet und geschlossen werden können, um mehr oder weniger Strahlung und/oder Luft durch die Schlitze treten zu lassen. Diese bekannten Sonnendächer haben den Nachteil, daß sie sperrig und relativ unansehnlich sind, so daß das von solchen Sonnendächern üblicherweise vermittelte Gefühl erhöhter Kopffreiheit und angenehmer Licht- und Luftverhältnisse beeinträchtigt ist; zudem kann bei den bekannten Strahlungsschutzblenden im Falle von verschiebbaren Schlitzabdeckungen nur weniger als 50 % der Dachöffnung für ungehindertes Durchtreten der Strahlung freigelegt werden; die alternativ verwendbaren klappbaren Schlitzabdeckungen können zwar größere Querschnittsflächen freigeben, erfordern aber einen hohen technischen Aufwand und sind kaum frei von Klappergeräuschen zu halten.

Es wurde auch bereits versucht, Strahlungsschutzblenden für Fahrzeugdächer (deutsche Öffenlegungsschrift DE-A-2 313 840) oder Insektenschutznetze für Schiebedächer (deutsche Öffenlegungsschrift DE-A-2 636 749) auf Rollovorrichtungen auf- und abzuwickeln, jedoch mit dem Nachteil, daß erstere komplizierte Dachgestelle zur Außenmontage am Fahrzeug erfordern und letztere nur bei geöffnetem Schiebedach wirksam werden. Derartige Rollovorrichtungen sind aber für Sonnendächer der eingangs genannten Artvöllig ungeeignet.

Aus der deutschen Auslegeschrift DE-B-1 102 581 ist ein Sonnendach bekannt, bei dem zwei im Winkel zueinander stehende, in der Mitte mit einem Gelenk verbundene Wickelwellen für das Rollovorgesehen sind. Bei diesem bekannten Rollo muß der Rollostoff in der Längsmittellinie überschüssiges Material aufweisen, weil das Rollosonstfunktionsunfähig ist - der Rollostoff hängt also in der Mitte stark durch. Wird kein überschüssiges Material oder kein entsprechend elastischer Rollostoffverwendet, kann sich die Wickelwelle des Rollos aufgrund der geometrischen Verhältnisse nicht drehen, weil ihre Gesamtlänge auf der .Unterseite zwangsläufig geringer als auf der Oberseite ist. Die Funktionstüchtigkeit dieser bekannten Rollovorrichtung steht auch deshalb in Frage, weil beim horizontalen Ziehen am Rollostoff ein in Zugrichtung wirkendes Drehmoment auf den nach oben gebogenen Mittelteil der Nickelwelle wirkt; es ist kaum vorstellbar, daß die üblicherweise einfach gehaltenen Endlager der Wickelwelle diesem Drehmoment standhalten können; vielmehr ist anzunehmen, daß der von der Wickelwelle gebildete Bogen unter dem Zug am Rollostoff in die horizontale Richtung umkippt und der Rollostoff dann umso stärker durchhängt. Es wird bestritten, daß diese bekannte Rollovorrichtung tatsächlich für die Verwendung an gebogenen Fahrzeugdächern geeignet ist. In jedem Fall ist ein die Kopffreiheit im Fahrgastraum verminderndes Durchhängen des Rollostoffes zu befürchten.

Im übrigen macht es die Durchbiegung der Wickelwelle erforderlich, zur Führung des Rollostoffes in einem der Wölbung des Fahrzeugsdaches entsprechenden Bogen, eine Schiene unterhalb des Dachrahmens unter Ausbildung eines Führungsschlitzes anzuordnen; dies schränkt die Kopffreiheit im Vergleich zu der durch das reine Sonnendach und seinen Rahmen gegebenen Kopffreiheit unerwünscht ein.

Aus der deutschen Öffenlegungsschrift DE-A-1 530 636 ist ein Rollo für Fahrzeugsonnendächer bekannt, das mittels eines starren Basisteiles nachrüstbar ist. Bei diesem über die gesamte Öffnungsbreite des Sonnendaches sich erstreckenden einteiligen Rollo ist eine Anbringung an gewölbten Fahrzeugdächern nur unter erheblicher Einbuße an Kopffreiheit möglich.

Aus der deutschen Öffenlegungsschrift DE-A-1 430 922 ist ein Sonnendach bekannt, bei dem das Verschlußelement kein starrer Deckel, sondern ein an seinen in Zugrichtung sich erstreckenden Seitenrändern geführtes aufrollbares Verschlußelement ist. Bei diesem Sonnendach ist also kein eigener starrer Deckel vorhanden. Das aufrollbare Rollomaterial kann seine Funktion als - selbstverständlich dichtendes - Verschlußelement nur dann erfüllen, wenn das Fahrzeugdach konkav durchgebogen ist - also entgegen der üblichen konvexen Wölbung. Nur so ist es möglich, daß bei einer Anordnung der Wickelwelle innerhalb des erhöhten Dachrahmens das aufrollbare Verschlußelement dicht gegen den Öffnungsrand der Dachöffnung anliegt.

Schließlich istausderFR-A-1511431 istein ähnliches Sonnendach mit den gleichen Nachteilen wie aus der DE-OS-1 530 636 bekannt.

Aus der gattungsbildenden DE-C2-31 36 854 ist ein Sonnendach mit zwei quer zur Fahrtrichtung sich erstreckenden Rollovorrichtungen bekannt, wobei die Rollovorrichtungen an einer besonderen Befestigungsplatte, die ihrerseits am Sonnendachrahmen unterhalb desselben befestigt werden muß, angebracht werden. Durch eine derartige Befestigungsplatte wird die Größe der Dachöffnung spürbar vermindert. Außerdem ist es erforderlich, für jede Hebeeinrichtung des Deckels des Sonnendaches eine besondere Befestigungsplatte zu verwenden, was hinsichtlich der Rollovorrichtungen zu einer aufwendigen Lagerhaltung führt. Bei diesem bekannten Sonnendach ist ein Nachrüsten von Rollovorrichtungen nicht vorgesehen und nur dann möglich, wenn das Sonnendach zunächst aus dem Fahrzeug wieder ausgebaut und die ursprüngliche Befestigungsplatte für die Hebeeinrichtung des Deckels gegen eine Befestigungsplatte mit Rollovorrichtungen ausgetauscht wird. Zu diesem Zweck muß auch die alte Hebevorrichtung ausgebaut und gegen eine andere ausgetauscht oder in die neue Befestigungsplatte wieder eingebaut werden. Grundsätzlich ist dieses bekannte Sonnendach ausschließlich zu dem Zweck vorgesehen, daß von vornherein dem Kundenwunsch nach einer bestimmten Hebeeinrichtung für die Deckelplatte Rechnung getragen werden kann. Aus diesem Grund werden bei diesem bekannten Sonnendach zum Festschrauben der Befestigungsplatte dieselben Schrauben verwendet, die zum Befestigen des Sonnendachrahmens an der Dachhaut des Fahrzeuges verwendet werden. Insgesamt ist bei diesem bekannten Sonnendach ein Nachrüsten von Rollovorrichtungen also nicht vorgesehen und auch nicht mit vertretbaren Aufwand erreichbar. Außerdem beeinträchtigt die Befestigungsplatte den Lichtdurchlaß und den ästhetischen Gesamteindruck des Sonnendaches, weil sie wegen der Notwendigkeit, beide Rollovorrichtungen sowie auch die Hebevorrichtung aufzunehmen, sowie wegen der Anordnung ihrer Befestigungspunkte sehr großflächig sein muß, was vor allem vom Fahrzeuginneren her gesehen störend wirkt.

Aus der US-B1-41 61 336 ist ein gattungsfremdes Sonnendach bekannt, bei dem zwei voneinander unabhängig betätigbare Deckel platten vorgesehen sind, die sich rechts und links einer in den Sonnendachrahmen fest eingebauten Mittelstrebe erstrecken und in ihrer Schließposition auf die einzelnen Dachöffnungen umlaufenden Dichtelementen, also auch im Bereich der Mittelstrebe, aufliegen. Diese Mittelstrebe kann auch zwei unmittelbar nebeneinander angeordnete Rollovorrichtungen aufnehmen. Sie ist allerdings weder nachrüstbar noch bei Sonnendächern mit einer einzigen Deckelscheibe verwendbar. Auch würde ein Fortfallenlassen der Mittelstrebe zur sofortigen Funktionsuntüchtigkeit des Sonnendaches führen, da es dann nicht mehr dicht ist. Insbesondere ist eine solche Mittelstrebe auch nicht für die Verwendung eines einzigen in der Sonnendachmitte angeordneten Betätigungsmechanismus zum Öffnen und Schließen der Deckelplatte geeignet.

Davon ausgehend liegt der Erfindung die Aufgabe zugrunde, für ein Sonnendach der eingangs genannten Art eine solche Rollovorrichtung zu schaffen, welche in den Fahrzeugaufbau, insbesondere in dessen Dachöffnung, derart integrierbar ist, daß sie die Kopffreiheit der Fahrgäste nicht beeinträchtigt, geringe Staumaße aufweist, für gekrümmte Fahrzeugdächer geeignet ist, bei geöffnetem, geschlossenem oder abgenommenem Deckel, insbesondere an ihrer Hinterkante anhebbaren Deckeln, verwendbar ist, deren notwendige Bauteile den ästhestischen Eindruck des Sonnendaches nicht beeinträchtigen und die eine möglichst variable Beeinflussung der Strahlenschutzwirkung, insbesondere für den Fahrer und den Beifahrer, gewährleistet; insbesondere sollte eine derartige Rollovorrichtung nachrüstbarsein; fernerhin sollte die Strahlungsschutzblende die Dachöffnung zwischen etwa 0 und 100 % ihrer Gesamtfläche abdecken und freigeben können und/oder sie sollte in Verbindung mit einem in an sich bekannter Weise am Öffnungsrand des Fahrzeugaufbaus abgestützten Rahmen, insbesondere aus Kunststoffteilen, verwendbar sein.

Als technische Lösung wird dafür die Anordnung gemäß Anspruch 1 und als Alternativlösung die Anordnung gemäß Anspruch 8 vorgeschlagen.

Die erfindungsgemaß ausgebildeten Anordnungen (Sonnendächer mit Strahlungsschutzblenden) sind vor allem für die Nachrüstung geeignet. Sie eignen sich vor allem für eine unauffällige Integration der Rollovorrichtung in die Rahmenstreben eines besonderen, am Öffnungsrand des Fahrzeugaufbaus abgestützten Rahmens des Sonnendachs; solche Rahmen werden vor allem bei der Nachrüstung von Fahrzeugen mit Sonnendächern verwendet.

Durch beide erfindungsgemäßen Lösungen wird erreicht, daß die Kopffreiheit der Fahrzeuginsassen durch die Strahlungsschutzblende nicht beeinträchtigt wird, die Strahlungsschutzblende aus einem elastischen und sehr nachgiebigen Schichtmaterial hergestellt sein kann, welche die Gefahr von Kopfverletzungen vermindert, ohne daß dabei die Strahlungsschutzblende durchhängt oder häßliche Falten wirft. Die erfindungsgemäßen Rollovorrichtungen samt ihrer Strahlungsschutzblenden weisen auch im aufgewickelten Zustand sehr geringe Staumaße auf und sind elegant in das Sonnendach integrierbar, so daß der ästhetische Eindruck durch die technische Wirkung nicht beeinträchtigt wird und daß die Strahlungsschutzblende ohne großen Aufwand an bestehenden Sonnendächern nachrüstbar ist. Besonders vorteilhaft ist die erfindungsgemäße Verwendung von zwei unabhängigen Rollovorrichtungen, die beidseitig der in Fahrtrichtung weisenden Mittellinie des Sonnendaches angeordnet sind, wenn die Betätigungsvorrichtung für den Deckel in die Dachöffnung hineinragt, was vor allem bei sogenannten Klappdächern der Fall ist; bei einigen dieser Sonnendächer muß die den Deckel öffnende und schließende Hand sogar in die Dachöffnung hinein- bzw. durch die Dachöffnung hindurchgreifen. Auch bei solchen Sonnendächern ist die Verwendung der erfindungsgemäßen Rolloanordnung problemlos möglich.

Die Erfindung basiert demnach auf dem Grundgedanken, zwei unabhängig voneinander betätigbare Strahlungsschutzrollos unterhalb des Deckels innerhalb des Sonnendachrahmens anzuordnen.

Die Rollovorrichtungen können für den Fahrer und den Beifahrer getrennt von vorne nach hinten, von rechts nach links oder jeweils umgekehrt betätigbar sein, sie können sowohl die annähernd gesamte Dachöffnung verlegen oder freigeben, oder aber im ausgezogenen Zustand zwischeneinander und/oder an den rahmenseitigen Kanten Luftspalte bilden.

Bei der Ausführungsform gemäß Patentanspruch 1 erstrecken sich zwei Rollovorrichtungen in Fahrtrichtung, so daß die Strahlungsschutzblenden quer zur Fahrtrichtung betätigt werden. Hierzu können die Enden der Rollovorrichtungen an gegenüberliegenden Rahmenstreben befestigt sein oder aber, gemäß einer Weiterbildung der Erfindung, beidseitig einer Befestigungsstrebe angeordnet sein, welche dann ihrerseits an den gegenüberliegenden Rahmenstreben befestigt ist; dabei können die Befestigungsstrebe und die Rollovorrichtung ein einteiliges Einbau und/oder Nachrüstelement bilden.

Dadurch, daß die Dachöffnung jeweils nur etwa zur Hälfte von einer Strahlungsschutzblende abgedeckt werden muß, kann die Rollovorrichtung mit aufgewickelter Strahlungsschutzblende einen äußerst geringen Durchmesser aufweisen, der in den meisten Fällen nicht größer als die Dicke des Dachrahmens unterhalb des Deckels ist.

Zudem kann bei Bedarf jeweils nur eine Hälfte der Dachöffnung verlegt oder freigegeben werden. Die meistens vorhandenen Fahrzeugdachwölbungen, denen das Sonnendach folgen muß, werden durch die erfindungsgemäße Anordnung der Rollovorrichtungen in erster Näherung von den Strahlungsschutzblenden nachvollzogen; die Rollovorrichtungen ragen daher auch nicht störend in den Fahrgastraum hinein.

Wenn eine Betätigungsvorrichtung zum Öffnen und Schliessen des Deckels etwa im Bereich der Mittellinie des Sonnendaches nahe oder an der vorderen oder hinteren Rahmenstrebe angeordnet ist und einen in die Dachöffnung hineinragenden Betätigungsfreiraum erfordert, empfiehlt es sich, gemäß einer Weiterbildung der Erfindung, die Rollovorrichtungen seitlich der Betätigungsvorrichtung anzuordnen. Dadurch entsteht ein in Fahrtrichtung sich erstreckender Freiraum zwischen den Strahlungsschutzblenden. Dieser Freiraum kann vorteilhafterweise durch eine sich in Fahrtrichtung im Bereich der Mittellinie zwischen den gegenüberliegenden Rahmenstreben erstreckende Dachstrebe insbesondere Befestigungsstrebe ausgefüllt werden, die insbesondere als Verstärkungselement für das Fahrzeugdach ausgebildet sein kann und der Befestigung von in Fahrtrichtung sich erstreckenden Rollovorrichtungen dienen kann; in letzterem Fall kann die Rollovorrichtung und die Dachstrebe vorteilhafterweise als einteiliges Einbauelement ausgeführt sein, welches, da zwischen Fahrer und Beifahrerangeordnet, auch dann die Kopffreiheit nicht behindert, wenn seine Bauhöhe die Rahmendicke überschreitet. Eine Öffnung in der Dachstrebe zum Betätigen einer Betätigungsvorrichtung zum Öffnen und Schließen des Deckels gestattet die Kombination der erfindungsgemäßen Strahlungsschutzblende mit verschiedenen Sonnendächern, die durch unterschiedliche Betätigungsorgane im Bereich der Mittellinie geöffnet und geschlossen werden. Zusätzliche oder alternative Lüftungsschlitze bildende Verbindungsstreben zwischen den beiden Rollovorrichtungen verbessern die Fahrzeugklimatisierung.

Gemäß einer anderen Weiterbildung der Erfindung kann die Rollovorrichtung oder die Dachstrebe mittels Rastelementen lösbar mit dem Rahmen verbindbar sein, so daß im Falle des Nichtgebrauches oder bei Nutzung der Dachöffnung für Transportzwecke der gesamte Dachöffnungsquerschnitt ungehindert nutzbar ist. Im übrigen können aber die Dachstrebe und/oder die Rollovorrichtungen, bzw. die vorteilhafterweise zu ihrer Abdeckung vorgesehenen Verkleidungsgehäuse mit dem Dachrahmen verschraubt oder als integraler Bestandteil der Rahmenstreben ausgeführt sein.

Die vorgenannten, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform eines erfindungsgemäßen Sonnendaches dargestellt worden ist. In der Zeichnung zeigen:
Fig. 1 ein Sonnendach mit ausschnittsweise dargestelltem Fahrzeugaufbau in Aufsicht;
Fig. 2 dasselbe Sonnendach im Schnitt entlang der Linie 11-11 gemäß Fig. 1;
Fig. 3 ein anderes Sonnendach in der Darstellung gemäß Fig. 1;
Fig. 4a eine ähnliche Befestigungsstrebe für ein Sonnendach wie in Fig. 3 in Ansicht von oben;
Fig. 4b dieselbe Befestigungsstrebe in Ansicht A wie in Fig. 4a;
Fig. 4c dieselbe Befestigungsstrebe in Ansicht B gemäß Fig. 4a;
Fig. 4d dieselbe Befestigungsstrebe in Seitenansicht;
Fig. 4e dieselbe Befestigungsstrebe im Schnitt entlang der Linie IVe-IVe gemäß Fig. 4a sowie
Fig. 4f dieselbe Befestigungsstrebe im Schnitt entlang der Linie IVf-IVf gemäß Fig. 4a.

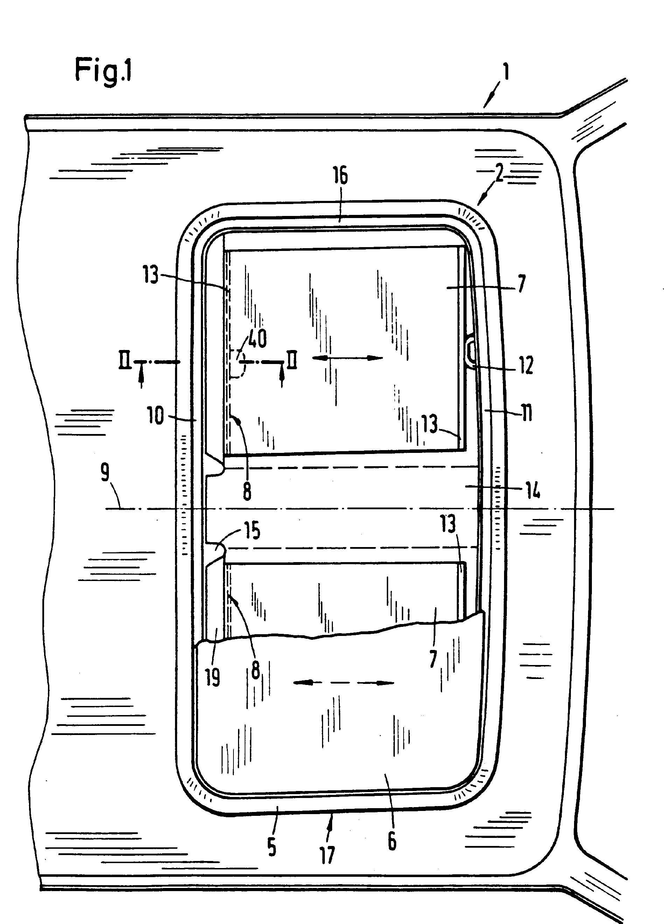

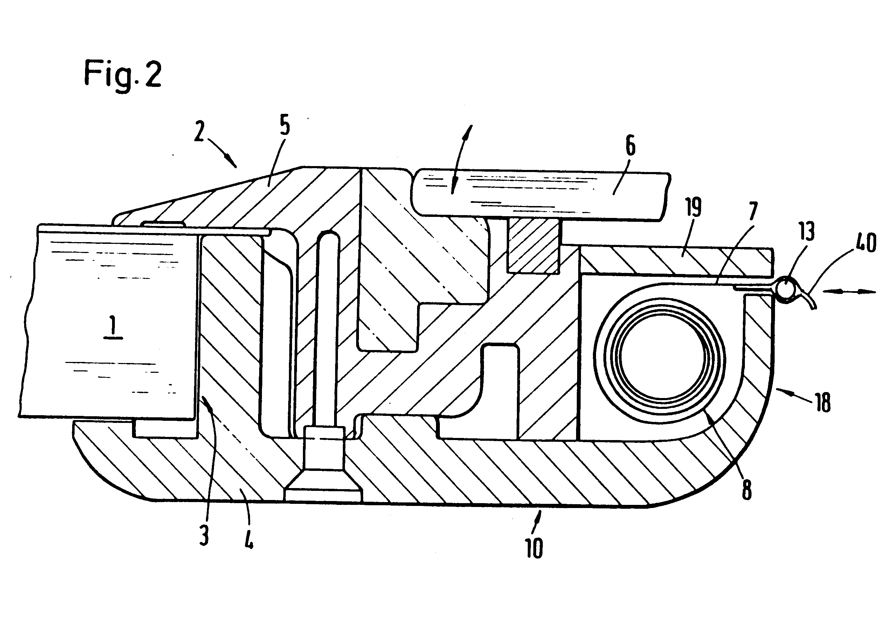

Im Dach eines Fahrzeugaufbaus 1 ist eine Dachöffnung mit Sonnendach 2 vorgesehen, welches aus einem am Öffnungsrand 3 (Fig. 2) des Fahrzeugaufbaus 1 abgestützten Rahmen 4, 5 und einem durchsichtigen, heb- oder schiebbaren Deckel 6 sowie einer Strahlungsschutzblende 7 unterhalb des Deckels 6 besteht. Die Strahlungsschutzblende 7 ist auf eine allgemein bekannte Rollovorrichtung 8 auf- und von ihr abwickelbar. Gemäß Fig. 1 sind zwei Rollovorrichtungen 8 beidseitig der in Fahrtrichtung weisenden Mittellinie 9 des Sonnendaches 2 in die hintere Rahmenstrebe 10 integriert. An der gegenüberliegenden, frontseitigen Rahmenstrebe 11 sind Befestigungspunkte 12 für die zu den Rollovorrichtungen 8 parallelen Längskanten 13 der freien Enden der Strahlungsschutzblenden 7 angeordnet.

Der in Fig. 1 gestrichelt dargestellte Bereich 14 beiderseits der Mittellinie 9 kann durch eine nicht dargestellte Dachstrebe ausgefüllt sein, deren linkes Ende im Bereich von Haltesockeln 15 für eine nicht dargestellte Betätigungsvorrichtung zum Öffnen und Schliessen des Deckela 6 mit der hinteren Rahmenstrebe 10 verbunden ist. Die Rollovorrichtungen 8 füllen den Raum zwischen diesen Haltesockeln 15 und den seitlichen Rahmenstreben 16 bzw. 17 aus.

Im aufgewickelten Zustand befindet sich die Strahlungsschutzblende 7 in der links in Fig. 1 gestrichelt dargestellten Position und gibt den gesamten Öffnungsquerschnitt des Sonnendaches 2 frei.

Gemäß Fig. 2 sind die Rollovorrichtungen 8 derart in die hintere Rahmenstrebe 10 integriert, daß die Rahmen 4 und 5 gleichzeitig drei Seiten eines Verkleidungsgehäuses 18 bilden, während mit einem aufsteckbaren Deckel 19 die vierte Seite des Verkleidungsgehäuses 18 unter Freilassung eines Führungs- und Anschlagschlitzes für die Strahlungsschutzblende 7 verschlossen ist. Die Strahlungsschutzblende 7 weist an der vorderen Längskante 13 ein an sich bekanntes Verstärkungselement und ein Griffelement sowie etwa erforderliche korrespondierende Befestigungsmittel im abgewickelten Zustand auf. Die Rollovorrichtung 8 besitzt einen an sich bekannten Rückholmechanismus und ist direkt an der Rahmenstrebe 10 befestigt. Die gesamte Rollovorrichtung und Strahlungsschutzblende sind also im ab-und aufgewickelten Zustand der Sonnenschutzblende innerhalb der Dachöffnung angeordnet, d.h. im wesentlichen im Bereich des durch die Rahmendicke vorgegebenen und von den Rahmenstreben aufgespannten Hohlraumes.

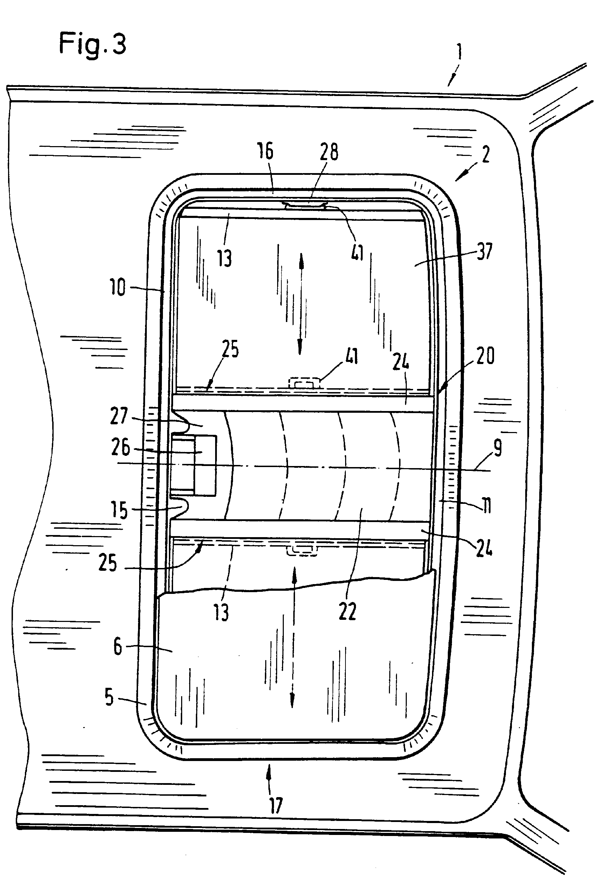

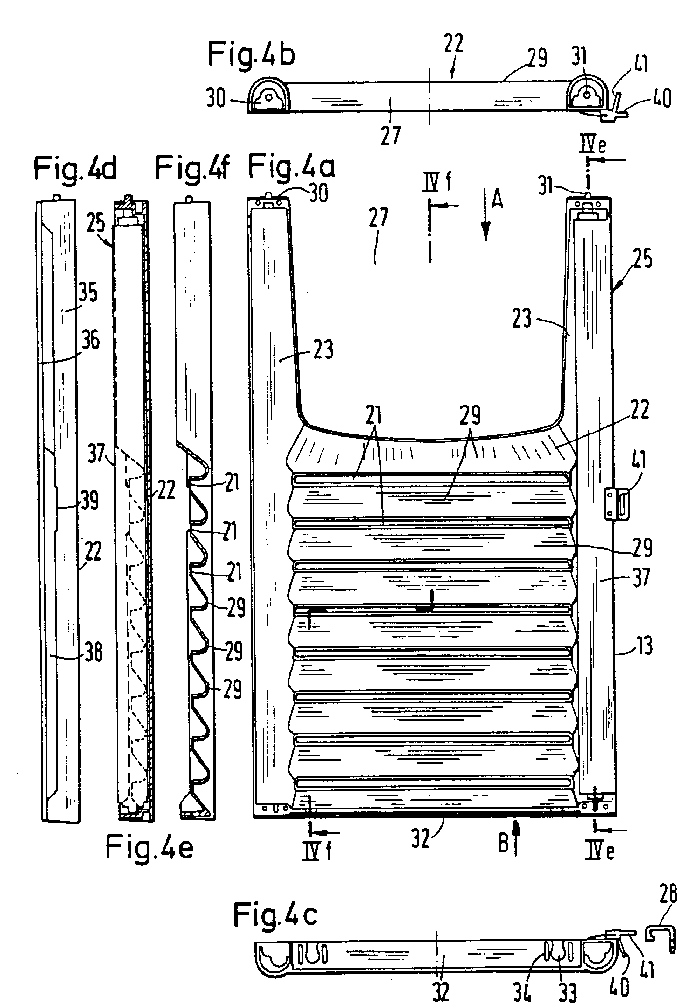

Gemäß Fig. 3 weist ein anderes erfindungsgemäßes Sonnendach eine als Befestigungsstrebe ausgebildete Dachstrebe 20 auf, welche entweder einstückig mit dem Rahmen 4 gebildet ist, oder als kompaktes Einbauelement zwischen die frontseitige und hintere Rahmenstrebe 11, 10 einsetz- und befestigbar ist. Dies geschieht bevorzugt mittels einer lösbaren Rastverbindung mit den betreffenden Rahmenstreben. Die Befestigungsstrebe 20 kann aus einem Bodenteil 22 und einem dieses zumindest teilweise abdeckenden Deckelteil 24 bestehen. Die Rollovorrichtungen 25 sind beiderseits einer an sich bekannten Betätigungsvorrichtung 26 zum Öffnen und Schließen des Deckels in Fahrtrichtung angeordnet. Die Rahmenstrebe 20 weist im Bereich der Betätigungsvorrichtung 26 eine Öffnung 27 für deren unbehindertes Betätigen auf. Im übrigen kann der M ittel bereich der Befestigungsstrebe 20, wie gestrichelt dargestellt, verziert sein, Lüftungs- und Lichtschlitze u.a. aufweisen. Die Strahlungsschutzblenden 25 werden zu den seitlichen Rahmenstreben 16, 17 hin abgewickelt und dort an Befestigungselementen 28 - wie Haken - innerhalb der Dachöffnung z. B. mittels Ösen 41 befestigt (s. Fig. 4a bis 4c).

Gemäß einer in den Fig. 4a bis 4f dargestellten bevorzugten Ausführungsform einer Befestigungsstrebe 20, kann deren Hauptelement aus einem aus Kunststoff gefertigten Bodenteil 22' bestehen; das an seinen Längsseiten die Rollogehäusebereiche 23 aufweist, zwischen denen sich Lüftungsschlitze 21 zwischen sich bildende Verbindungsstreben 29 in einem Teilbereich erstrecken, während in dem übrigen Bereich zwischen den Rollogehäusebereichen 23 die Öffnung 27 für eine Betätigungsvorrichtung gebildet wird. Zur lösbaren Befestigung am Rahmen des Sonnendaches können an der einen Stirnseite 30 in nicht dargestellte Bohrungen des Sonnendachrahmens greifende Nocken 31 vorgesehen sein, während die gegenüberliegende Stirnfläche 32 der Befestigungsstrebe 20 Rastschlitze 33 zur Verrastung mit korrespondierenden rahmenseitigen Rastmitteln aufweist, wobei seitlich der Rastschlitze 33 angeordnete längliche Durchbrechungen 34 in der Stirnfläche 32 eine gewisse Federwirkung gewährleisten, die für häufigeres Öffnen und Schließen der Rastverbindung vorteilhaft ist.

Wie sich aus den Fig. 4d bis 4f ergibt, sind die äußeren Längswände 35 der Befestigungsstrebe 20 außer in ihren stirnseitigen Endbereichen leicht abgesenkt, so daß sich in Verbindung mit auf die Rollogehäusebereiche aufschraubbaren Deckeln 36 (Fig. 4d) ein Führungsschlitz 38 für die auf die nur in der rechten Hälfte der Fig. 4a bis 4c und in Fig. 4e dargestellte Rollovorrichtung 25 selbsttätig aufwickelbare Strahlungsschutzblende 37 freibleibt. Eine zentrale Schlitzverbreiterung 39 im Führungsschlitz 38 dient der teilweisen Versenkbarkeit der Befestigungsöse 41 (Fig. 1 bis 3) der Strahlungsschutzblende.

Besonders vorteilhaft ist eine Ein-Punkt-Befestigung des abgerollten Rollos mittels einer Haken/Ösen-Verbindung wie in Fig. 3 sowie Fig. 4a bis 4c dargestellt, bei welcher der an der Längskantenmitte der Strahlungsschutzblende 37 z.B. durch Nieten befestigte Haken oder die Öse eine schräg nach unten weisende starre Betätigungslasche trägt.

### Bezugzeichenliste:

1 Fahrzeugaufbau
2 Sonnendach
3 Öffnungsrand
4 Rahmen
5 Rahmen
6 Deckel
7 Strahlungsschutzblende
8 Rollovorrichtung
9 Mittellinie
10 Rahmenstrebe (hintere)
11 Rahmenstrebe (Front)
12 Befestigungspunkte
13 Längskante
14 Bereich
15 Haltesockel
16 Rahmenstrebe (Seite)
17 Rahmenstrebe (Seite)
18 Verkleidungsgehäuse
19 Deckel
20 Befestigungsstrebe
21 Lüftungsschlitze
22 Bodenteil
22' Bodenteil
23 Rollogehäusebereiche
24 Deckelteil
25 Rollovorrichtungen
26 Betätigungsvorrichtung
27 Öffnung
28 Befestigungselemente
29 Verbindungsstreben
30 Stirnseite
31 Nocken
32 Stirnfläche
33 Rastschlitze
34 Durchbrechung
35 Längswände
36 Deckel
37 Strahlungsschutzblende
38 Führungsschlitz
39 Schlitzverbreiterung
40 Betätigungslasche
41 Ösen

A Ansicht
B Ansicht
C Ansicht

## Patentansprüche

1. Sonnendach für Fahrzeuge, bestehend aus einer mit einem einzigen Deckel (6) verschließbaren Dachöffnung des Fahrzeugaufbaus (1) und je einer unabhängig betätigbaren Rollovorrichtung (8; 25) beidseitig der in Fahrtrichtung weisenden Mittellinie (9) des Sonnendaches (2) mit auf- und abwickelbaren, unterhalb des Deckels (6) aufspannbaren Strahlungsschutzblenden (7; 37), bei dem die beiden Rollovorrichtungen samt ihrer Strahlungsschutzblenden innerhalb der Dachöffnung angeordnet und befestigt sind, gekennzeichnet durch eine in Fahrtrichtung im Bereich der Mittellinie (9) zwischen den gegenüberliegenden Rändern der Dachöffnung sich insgesamt unterhalb des einzigen Deckels (6) erstreckende gegebenenfalls als Dachstrebe ausgebildete Befestigungsstrebe (20) für die beiden Rollovorrichtungen oder die beiden freien Enden der Strahlungsschutzblenden.

2. Sonnendach nach Anspruch 1, dadurch gekennzeichnet, daß die Befestigungsstrebe (20) eine Öffnung (27) zum Betätigen der Betätigungsvorrichtung (26) zum Öffnen und Schließen des Deckels (6) aufweist und die beiden Rollovorrichtungen (25) seitlich der Betätigungsvorrichtung (26) angeordnet sind.

3. Sonnendach nach Anspruch 1 oder 2, dadurch gekennzeichnet, daß die Befestigungsstrebe (20) aus den beiden mit gegenseitigen Abstand angeordneten Rollovorrichtungen und zwischen diesen sich erstreckenden Lüftungsschlitze bildenden Verbindungsstreben besteht.

4. Sonnendach nach einem der Ansprüche 1 bis 3, dadurch gekennzeichnet, daß die beiden Rollovorrichtungen (25) und die Befestigungsstrebe (20) ein einteiliges Einbauelement bilden.

5. Sonnendach nach einem der Ansprüche 1 bis 4, dadurch gekennzeichnet daß die Befestigungsstrebe (20) oder die Rollovorrichtungen (25) mittels Rastelementen lösbar mit dem Öffnungsrand (3) der Dachöffnung oder mit dem die Dachöffnung (2) umgebenden Rahmen (4, 5) verbindbar ist/sind.

6. Sonnendach nach einem der Ansprüche 1 bis 5, dadurch gekennzeichnet, daß die Befestigungsstrebe (20) als Verstärkungselement ausgebildet ist.

7. Sonnendach nach einem der Ansprüche 1 bis 6, gekennzeichnet durch Verkleidungsgehäuse der Rollovorrichtungen.

8. Sonnendach nach dem Oberbegriff von Anspruch 1, bei dem das Sonnendach (2) einen am Öffnungsrand (3) des Fahrzeugaufbaues (1) abgestützten, aus Rahmenstreben (10, 11, 16 und 17) bestehenden umlaufenden Rahmen (4, 5) aufweist,
dadurch gekennzeichnet,
daß die beiden Rollovorrichtungen (8) unmittelbar an der vorderen oder der hinteren oder den seitlichen Rahmenstrebe/n (11 bzw. 10 bzw. 16 und 17) des Rahmens (4, 5), gegebenenfalls mittels Rastelementen, befestigbarsind und zwei entsprechend in die vordere oder hintere oder in die seitlichen Rahmenstrebe/n (11 bzw. 10 bzw. 16 und 17) des Rahmens (4, 5) einstückig integrierte Verkleidungsgehäuse (18) für je eine Rollovorrichtung (8) vorgesehen sind.

9. Sonnendach nach Anspruch 8, gekennzeichnet durch einen als vierte Seite des Verkleidungsgehäuses (18) dienenden Deckel (19).

10. Sonnendach nach Anspruch 8 oder 9, gekennzeichnet durch einen Führungs- und Anschlagsschiitz des Verkieidungsgehäuses (18,19) für die Strahlungsschutzblende (7).

11. Sonnendach nach einem derAnsprüche 8 bis 10, gekennzeichnet durch mindestens ein, gegebenfalls als Befestigungsstrebe ausgebildetes, Befestigungselement für die freien Enden der Strahlungsschutzblender.

## Claims

1. A sunroof for vehicles, comprising a roof opening in the vehicle structure (1), which opening can be closed with a single lid (6), and two independently operable roller-blind devices (8, 25) each on either side of the median line (9) which line points in the direction of travel - of the sunroof (2), with radiation protection shields (7, 37) which can be rolled up and down and fixed by tension below the lid (6); in which the two roller-blind devices, together with their radiation protection shields, are arranged and fastened within the roof opening, characterised by a fastening strut (20) for the two roller-blind devices or the two free ends of the radiation protection shields, which fastening strut is optionally constructed as a roof strut and which as a whole extends below the single lid (6) in the direction of travel in the region of the median line (9) between the opposing edges of the roof opening.

2. A sunroof according to Claim 1, characterised in that the fastening strut (20) has an opening (27) for operating the operating device (26) for opening and closing the lid (6), and the too roller-blind devices (25) are arranged laterally of the operating device (26).

3. Asunroofaccording to Claim 1 or2, characterised in that the fastening strut (20) is constituted by the two roller-blind devices, arranged at a distance from each other, and by connecting struts forming ventilation slits extending between these devices.

4. A sunroof according to any one of Claims 1 to 3, characterised in that the two roller-blind devices (25) and the fastening strut (20) form a single build-in element.

5. A sunroof according to any one of Claims 1 to 4, characterised in that the fastening strut (20) or the roller-blind devices (25) is/are detachably connected, by means of notch elements, with the opening edge (3) of the roof opening (2) or with the frame (4, 5) surrounding the roof opening (2).

6. A sunroof according to any one of Claims 1 to 5, characterised in that the fastening strut (20) is constructed as a reinforcing element.

7. A sunroof according to any one of Claims 1 to 6, characterised by covering housings of the roller-blind devices.

8. A sunroof according to the pre-characterising clause of Claim 1, in which the sunroof (2) has an encircling frame (4, 5) comprising frame struts (10,11,16 and 17) and supported on the edge (3) of the opening in the vehicle structure (1),
characterised in that
the two roller-blinds (8) can be fastened directly on the front or back or side frame strut(s) (11 or 10 or 16 and 17) of the frame (4, 5), optionally by means of notch elements, and two covering housings (18) are provided, each for one roller-blind device (8), which housings are integrated in one piece into the front or back or side frame strut(s) (11 or 10 or 16 and 17) of the frame (4, 5).

9. A sunroof according to Claim 8, characterised by a lid (19) serving as a fourth side of the covering housing (18).

10. Asunroof according to Claim 8 or 9, characterised by a guiding and stop slit in the covering housing (18, 19) for the radiation protection shield (7).

11. A sunroof according to any one of Claims 8 to 10, characterised by at least one fastening element, which may be constructed as a fastening strut, for the free ends of the radiation protection shields.

## Revendications

1. Toit pare-soleil pour véhicules automobiles comportant une ouverture pratiquee dans le toit de la carrosserie (1) du véhicule, pouvant être fermée par une seule couverture (6), et de part et d'autre de la ligne médiane (9) du toit pare-soleil (2), s'étendant dans la direction de marche, un dispositif rouleau (8; 25), pouvant être actionné indépendamment, avec des écrans de protection contre les rayonnements (7; 37) enroulables et déroulables, pouvant être tendus sous la couverture (6), les deux dispositifs à rouleau avec leurs écrans de protection contre les rayonnements étant placés et fixés à l'intérieur de l'ouverture du toit, caractérisé par un étai de fixation (20), le cas échéant servant d'étai pour le toit, s'étendant dans la direction de la marche, dans la zone de la ligne médiane (9), entre les bords opposés de l'ouverture du toit, dans son ensemble, sous la couverture (6) unique, pour les deux dispositifs rouleau ou les deux extrémités libres des écrans de protection contre les rayonnements.

2. Toit pare-soleil selon la revendication 1, caractérisé en ce que l'étai de fixation (20) comporte une ouverture (27) pour actionner le dispositif de commande (26) d'ouverture et de fermeture de la couverture (6), et en ce que les deux dispositifs à rouleau (25) sont placés sur les côtés du dispositif de commande (26).

3. Toit pare-soleil selon la revendication 1 ou 2, caractérisé en ce que l'étai de fixation (20) est constitué des deux dispositifs à rouleau placés écartés, et des entretoises s'étendant entre ceux-ci et formant des fentes d'aération.

4. Toit pare-soleil selon l'une des revendications 1 à 3, caractérisé en ce que les deux dispositifs à rouleau (25) et l'étai de fixation (20) forment un élément à encastrer d'une seule pièce.

5. Toit pare-soleil selon l'une des revendications 1 à 4, caractérisé en ce que l'étai de fixation (20), ou les dispositifs rouleau (25), peut/peuvent être assemblé(s) de façon amovible, par des éléments d'arrêt, au bord d'ouverture (3) de l'ouverture de toi, ou au cadre (4, 5) entourant l'ouverture de toit.

6. Toit pare-soleil selon l'une des revendications 1 à 5, caractérisé en ce que l'étai de fixation (20) est un élément de renfort.

7. Toit pare-soleil selon l'une des revendications 1 à 6, caractérisé par un boîtier de revêtement des dispositifs à rouleau.

8. Toit pare-soleil selon le préambule de la revendication 1, dans lequel le toit pare-soleil (2) comporte un cadre (4, 5) continu, prenant appui sur le bord d'ouverture (3) de la carrosserie (1) du véhicule, constitué de côtés de cadre (10, 11, 16 et 17).
caractérisé en ce que
les deux dispositifs à rouleau (8) peuvent être directement fixés, le cas échéant au moyen d'éléments d'arrêt, sur le/les côté(s) avant ou arrière ou latéraux (11 ou 10 ou 16 et 17) du cadre (4, 5), et en ce que deux boîtiers de revêtement (18) destinés àa recevoir chacun un dispositif à rouleau (8), sont prévus de même et ces boîtiers de revêtement sont intégrés d'une seule pièce dans le/les côté(s) avant ou arrière ou latéraux (11 ou 10 ou 16 et 17) du cadre (4, 5).

9. Toit pare-soleil selon la revendication 8, caractérisé par une couverture (19) servant de quatrième côté au boîtier de revêtement (18).

10. Toit pare-soleil selon la revendication 8 ou 9, caractérisé par une fente de guidage et de butée du boîtier de revêtement (18, 19) pour l'écran de protection contre les rayonnements (7).

11. Toit pare-soleil selon l'une des revendications 8 a 10, caractérisé par au moins un élement de fixation, se présentant le cas échéant sous la forme d'un étai de fixation, pour les extrémités libres des écrans de protection contre les rayonnements
